# EUROPÄISCHE PATENTANMELDUNG

(11) **EP 2 101 051 A1**
(43) Veröffentlichungstag der Anmeldung: **16.09.2009**
(21) Anmeldenummer: 08004589.1
(22) Anmeldetag: 12.03.2008
(51) Int. Cl.: F02C 1/05, F01K 3/18, F03D 9/02

(54) **Speicherung elektrischer Energie mit Wärmespeicher und Rückverstromung mittels eines thermodynamischen Kreisprozesses**

(71) Anmelder: SIEMENS AKTIENGESELLSCHAFT, 80333 München (DE)
(72) Erfinder: Jockenhoevel, Tobias, Dr., 90419 Nürnberg (DE); König, Norbert, 91083 Baiersdorf (DE); Nies, Rainer, 91080 Uttenreuth (DE); Vortmeyer, Nicolas, Dr., 91054 Erlangen (DE); Wolf, Erik, 91341 Röttenbach (DE)

(57) **Zusammenfassung**

Die Erfindung betrifft eine Vorrichtung bzw. ein Verfahren zur Nutzung von Überkapazitäten im Stromnetz (9), wobei im Falle eines Überangebots an Energie diese direkt über ein Heizelement (8) in einen Wärmespeicher (10) eingebracht wird und im Entladungsfall dieses Wärmespeichers (10) die Wärme aus dem Wärmespeicher entnommen und einem thermodynamischen Kreisprozess (12) zur Verfügung gestellt wird.

## Beschreibung

Die Erfindung betrifft eine Vorrichtung bzw. ein Verfahren zur Nutzung von Überkapazitäten im Stromnetz.

Im elektrischen Netz müssen die erzeugte Leistung und der Verbrauch immer im Gleichgewicht stehen. Durch den starken Ausbau erneuerbarer Energien stehen zeitweise starke Überkapazitäten zur Verfügung. Dem Überangebot an kontrollierbaren erneuerbaren Energien kann auf verschiedene Weise begegnet werden: Das fluktuierende Angebot kann durch Leistungssteigerung beziehungsweise -minderung konventioneller Kraftwerke ausgeglichen werden, anfallende erneuerbare Energie könnte erst gar nicht ins Netz eingespeist werden, d.h. dass beispielsweise Windturbinen abgeschaltet werden, oder die Energie könnte in ein Energiespeichersystem eingespeichert werden, also in Pumpspeicherkraftwerke, Druckluftspeicherkraftwerke oder Batterien mit unter Umständen hoher Anlagenkomplexität und hohen Kosten.

Die EP 1 577 548 A1 und die EP 1 577 549 A1 beschreiben eine Vorrichtung und eine Methode zur Speicherung von Energie und zur Stromerzeugung. Mit aus erneuerbaren Energien wie Windbeziehungsweise Sonnenenergie erzeugter elektrischer Energie wird ein Wärmespeicher erwärmt. Bei Bedarf wird die Wärme im Wärmespeicher genutzt, um Dampf zu erzeugen, der direkt einem thermodynamischen Prozess in einer Dampfturbine zugeführt wird, wobei die Dampferzeugung gegebenenfalls konventionell ergänzt wird.

Aufgabe der Erfindung ist es, eine verbesserte Vorrichtung und ein verbessertes Verfahren zur Nutzung von Überkapazitäten im Stromnetz vorzuschlagen.

Diese Aufgabe wird erfindungsgemäß gelöst durch die Merkmale des Patentansprüche 1 und 13.

Weitere vorteilhafte Ausführungsformen sind in den Unteransprüchen genannt.

Ein Nachteil der Vorrichtung und des Verfahrens des Standes der Technik ist die zum Betrieb einer Dampfturbine nicht immer ausreichende Qualität und auch Quantität des im Wärmespeicher erzeugten Dampfes, wodurch eine konventionelle Nachfeuerung notwendig wird. Außerdem beschränken sich Vorrichtung und Verfahren des Standes der Technik auf ein Medium, nämlich Dampf.

Die erfinderische Vorrichtung hingegen will die Überkapazitäten im Stromnetz für eine Reihe verschiedener Wärmeverbraucher nutzen und sieht daher einen Wärmespeicher und ein Heizelement zur Speicherung von Energie aus dem Stromnetz im Wärmespeicher sowie einen Wärmetauscher mit einer Primärseite und einer Sekundärseite vor, wobei die Primärseite zur Ausspeicherung von Wärme aus dem Wärmespeicher thermisch an den Wärmespeicher angekoppelt ist und wobei die Sekundärseite in eine Kraftwerksanlage geschaltet ist.

Der Wärmespeicher wird also nicht nur zur Erzeugung von Dampf verwendet, der direkt einer Dampfturbine zugeführt wird.

In einer vorteilhaften Ausgestaltung der Erfindung umfasst die Kraftwerksanlage, in die der Wärmetauscher geschaltet ist, eine Gasturbine, wobei der Wärmetauscher zur Luftvorwärmung sekundärseitig in eine Luftzufuhrleitung eines Brenners geschaltet ist.

Es ist ebenfalls vorteilhaft, wenn der Wärmetauscher sekundärseitig in eine Brennstoffzufuhrleitung geschaltet ist, um den Brennstoff vorzuwärmen.

Es ist außerdem zweckmäßig, wenn der Wärmetauscher sekundärseitig in den Strom der Verbrennungsgase zu deren Zwischenüberhitzung geschaltet ist.

In einer weiteren vorteilhaften Ausgestaltung der Erfindung kann der Wärmetauscher aber auch in eine Kraftwerksanlage geschaltet sein, die eine Dampfturbine enthält.

Dort ist es zweckmäßig, den Wärmetauscher zur Zwischenüberhitzung sekundärseitig in den Dampfstrom zu schalten.

Zweckmäßig ist es auch, wenn der Wärmetauscher als Vorwärmer sekundärseitig in den Wasser/Dampf-Kreislauf geschaltet ist.

Weiterhin zweckmäßig ist es, wenn der Wärmetauscher zur Kohletrocknung verwendet wird.

In einer besonders vorteilhaften Kombination von einer Gas- und einer Dampfturbine, die einen Abhitzedampferzeuger zur Erzeugung von Dampf für die Dampfturbine mittels Wärme aus den Abgasen der Gasturbine umfasst, kann der Speisewasservorwärmer im Abhitzedampferzeuger durch einen Wärmetauscher ersetzt oder ergänzt werden, der primärseitig in den Wärmespeicher geschaltet ist.

Im erfinderischen Verfahren wird zur Nutzung von Überkapazitäten im Stromnetz im Falle eines Überangebots an Energie diese direkt über ein Heizelement in einen Wärmespeicher eingebracht und im Entladungsfall dieses Wärmespeichers die Wärme aus dem Wärmespeicher entnommen und einem thermodynamischen Kreisprozess zur Verfügung gestellt.

Zweckmäßigerweise ist der thermodynamische Kreisprozess ein bestehender Kraftwerksprozess.

In einer vorteilhaften Ausführungsform der Erfindung wird die Wärme aus dem Wärmespeicher zur Vorwärmung von Luft in einer Luftzufuhrleitung einer Brennkammer, insbesondere einer Gasturbinenanlage, verwendet.

In einer weiteren vorteilhaften Ausführungsform wird mit Wärme aus dem Wärmespeicher Brennstoff vorgewärmt. Beide Vorwärmungen reduzieren den Brennstoffverbrauch. Bei nahezu gleichbleibender abgegebener Leistung der Gasturbine führt die Vorwärmung somit zu einer Erhöhung des Gesamtwirkungsgrades der Gasturbinenanlage.

Eine hohe Energieausbeute kann auch dadurch erreicht werden, dass der Abgasstrom in einer Turbine einer Gasturbine zwischenüberhitzt wird.

In einer weiteren vorteilhaften Ausgestaltung der Erfindung wird mit der Wärme aus dem Wärmespeicher ein Dampfstrom einer Dampfturbine zwischenüberhitzt.

Es kann aber auch an einer anderen Stelle des Wasser-Dampf-Kreislaufs zweckmäßig sein, Wasser mit Wärme aus dem Wärmespeicher vorzuwärmen, beispielsweise, wenn der Wärmeinhalt des Wärmespeichers für die Zwischenüberhitzung in der Turbine nicht ausreicht.

Mit der Wärme aus dem Wärmespeicher kann auch Kohle getrocknet werden, so dass ein Abzweigen von hochwertigem Dampf aus dem Dampfturbinenprozess entfällt.

Besonders vorteilhaft wegen der geringen Umwandlungsverluste ist es, Wasser als Wärmeträgermedium der Sekundärseite des Wärmetauschers zu verwenden, der primärseitig in den Wärmespeicher geschaltet ist, und den durch die Wärme im Wärmespeicher erzeugten Dampf direkt in eine Dampfturbine einzuspeisen.

Nachfolgend wird die Erfindung beispielhaft anhand der Zeichnungen näher erläutert. Es zeigen:
- FIG 1: schematisch das Konzept für die Speicherung von elektrischer Energie mit Wärmespeicher und Rückverstromung mittels eines thermodynamischen Kreisprozesses
- FIG 2: schematisch die erfinderische Vorrichtung mit Heizelement, Wärmespeicher und Wärmetauscher
- FIG 3: schematisch einen Spezialfall der FIG 2 mit Wasserleitung
- FIG 4: eine Gasturbinenanlage mit Luftvorwärmung, Brennstoffvorwärmung und Zwischenüberhitzung
- FIG 5: eine Dampfturbinenanlage, bei der der mittels Wärme aus dem Wärmespeicher erzeugte Dampf direkt in die Dampfturbine eingeleitet wird, das Kondensat vorwärmt und/oder den Brennstoff vortrocknet, und
- FIG 6: einen Abhitzedampferzeuger in einer GuD-Anlage mit Direktdampf und Zwischenüberhitzung.

Im Wesentlichen gleich bleibende Elemente werden grundsätzlich mit den gleichen Bezugszeichen beziffert.

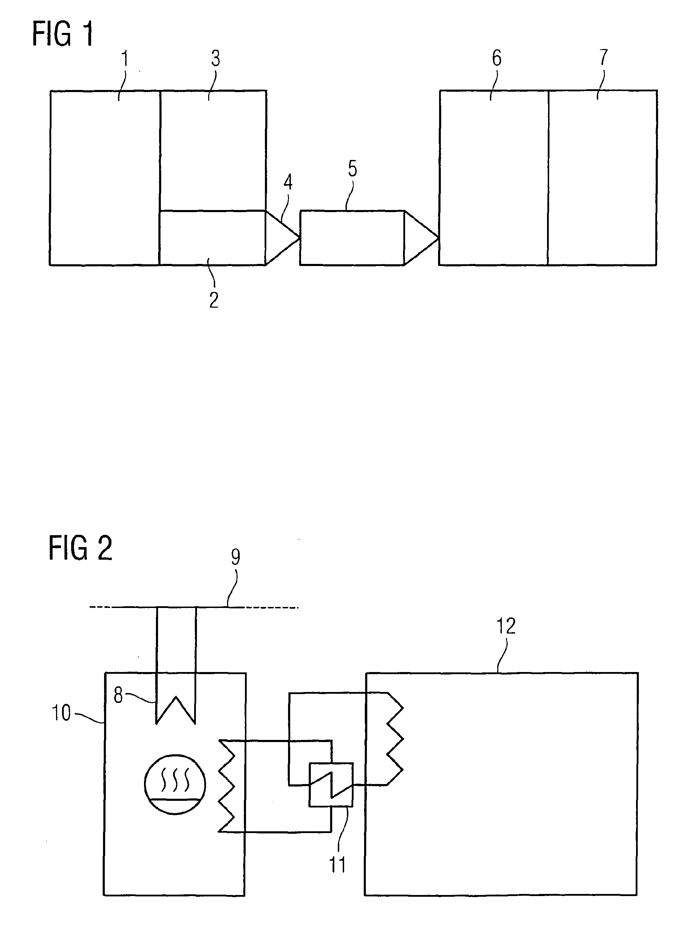

FIG 1 beschreibt das erfinderische Verfahren zur Nutzung von Überkapazitäten im Stromnetz. Übersteigt zu einem Zeitpunkt t1 die erzeugte Leistung 1 im Netz den Verbrauch 3, wird das Überangebot 2 an elektrischer Energie direkt über ein Heizelement in einen Wärmespeicher, zum Beispiel einen Salzspeicher oder Betonwärmespeicher, eingespeichert 4.

Im Entladungsfall dieses Energiespeichersystems, beispielsweise bei erhöhtem Leistungsbedarf im Stromnetz, wird die Wärme aus dem Wärmespeicher wieder entnommen und über einen Wärmetauscher, dessen Primärseite thermisch an den Wärmespeicher angekoppelt ist und dessen Sekundärseite in eine Kraftwerksanlage geschaltet ist, einer Kraftwerksanlage zugeführt 5, so dass die zum Zeitpunkt t2 erzeugte Leistung 6 den Bedarf 7 zum Zeitpunkt t2 deckt.

FIG 2 zeigt die wesentlichen Komponenten der erfinderischen Vorrichtung zur Nutzung von Überkapazitäten im Stromnetz.

Über ein Heizelement 8 kann aus dem Stromnetz 9 elektrische Energie direkt in den Wärmespeicher 10 eingespeichert werden. Die Primärseite des Wärmetauschers 11 ist thermisch an den Wärmespeicher 10 gekoppelt. Die Sekundärseite des Wärmetauschers 11 ist in eine Kraftwerksanlage 12 geschaltet.

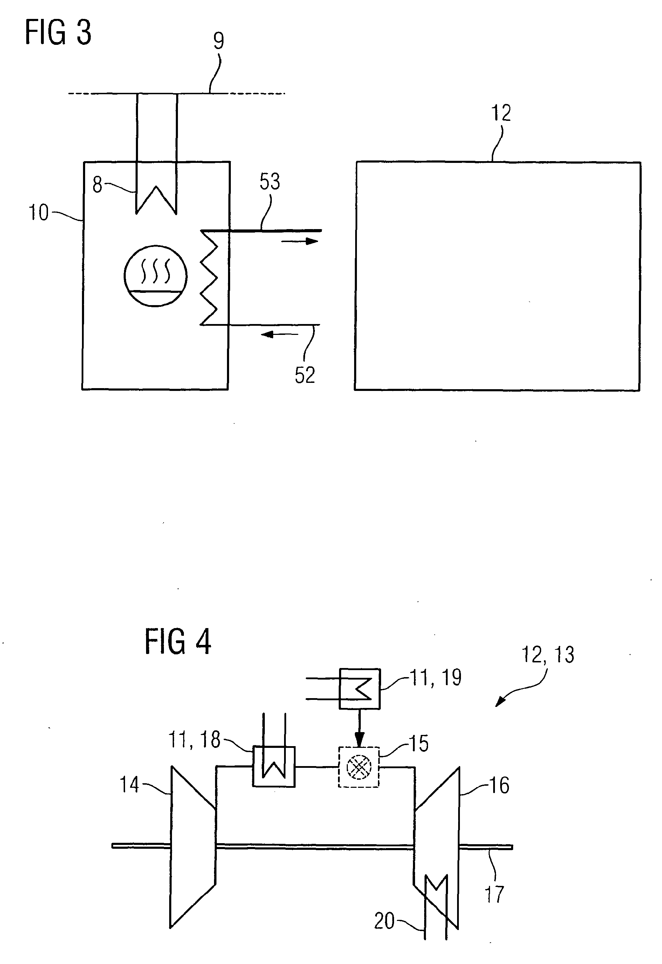

Die FIG 3 zeigt einen Spezialfall der FIG 2, bei dem über eine Wasserleitung 52 dem Wärmespeicher 10 Wasser zugeführt wird. Das Wasser wird im Wärmetausch mit dem Wärmespeicher 10 verdampft und über die Dampfleitung 53 der Kraftwerksanlage 12 zugeführt.

Die Kraftwerksanlage 12 gemäß FIG 4 zeigt eine Gasturbine 13 und umfasst einen Verdichter 14 zum Verdichten der Luft, welche dann einer Brennkammer 15 zugeführt wird und mit Brennstoff verbrannt wird. Die heißen Verbrennungsgase treiben die Turbine 16 an, die über eine Welle 17 mit dem Verdichter 14 gekoppelt ist. Wärme aus dem Wärmespeicher 10 kann über Wärmetauscher 11 sowohl zur Vorwärmung 18 der Druckluft, als auch zur Brennstoffvorwärmung 19 verwendet werden.

Optional wird die Brennkammer 15 vollständig abgeschaltet und die Turbine 16 lediglich durch die über einen Wärmetauscher 11 erwärmte komprimierte Luft angetrieben. Zweckmäßigerweise erfolgt eine Zwischenüberhitzung 20 im Bereich der Turbine 16.

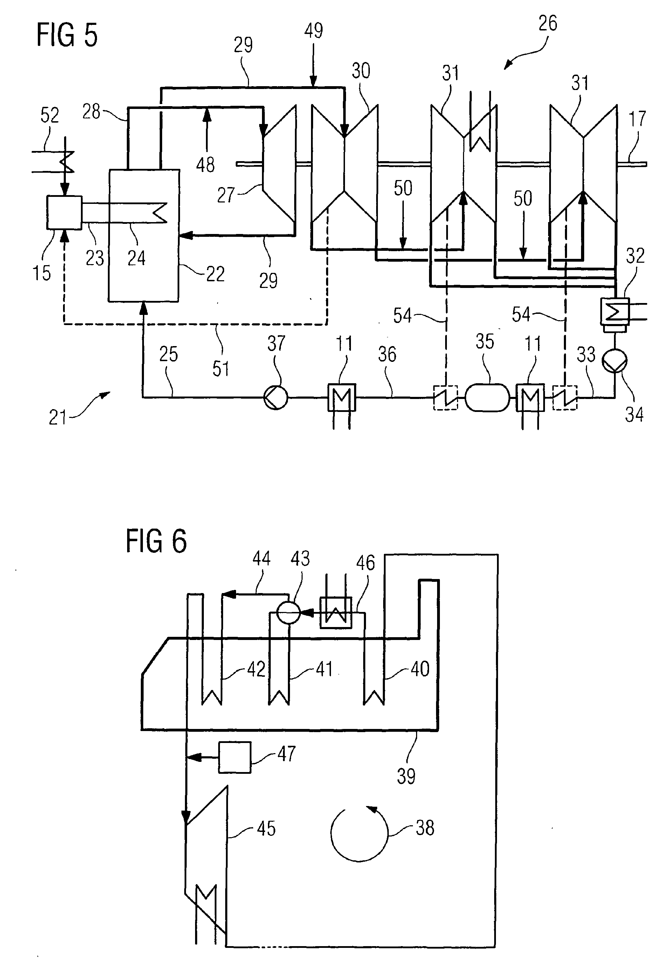

Die Kraftwerksanlage gemäß FIG 5 zeigt ein Dampfkraftwerk 21 und umfasst eine Brennkammer 15, der über ein Versorgungssystem ein Brennstoff und ein Oxidationsmittel zuführbar sind. Die bei der Verbrennung des Brennstoffs frei werdende Wärme aus der Brennkammer 15 ist auf einen Dampferzeuger 22 übertragbar. Im Ausführungsbeispiel ist dies dadurch angedeutet, dass eine Abgasleitung 23 aus der Brennkammer 15 über einen im Dampferzeuger 22 angeordneten Wärmetauscher 24 geführt ist. Selbstverständlich ist aber jegliche andere Art eines geeigneten Wärmeübertrags von der Brennkammer 15 in den Dampferzeuger 22, beispielsweise über eine direkte Befeuerung, denkbar.

Dem Dampferzeuger 22 ist über einen Wasser-Dampf-Kreislauf 25 eine Dampfturbine 26 zugeschaltet, die über eine Welle 17 einen nicht näher dargestellten Generator antreibt. Im Ausführungsbeispiel ist die Dampfturbine 26 dreistufig ausgeführt und umfasst einen Hochdruckteil 27, der eingangsseitig über eine Dampfleitung 28 mit dem Dampferzeuger 22 verbunden ist. Ausgangsseitig ist der Hochdruckteil 27 über eine über den Dampferzeuger 22 geführte Überhitzerleitung 29 mit dem nachgeschalteten Mitteldruckteil 30 der Dampfturbine 26 verbunden. Die Teilturbinen des Mitteldruckteils 30 sind ihrerseits wiederum ausgangsseitig mit den Niederdruckteilen 31 der Dampfturbine 26 verbunden.

Anstelle der somit dreistufig ausgeführten Dampfturbine 26 kann selbstverständlich auch eine zweistufige oder eine andersartige geeignet gewählte Dampfturbine vorgesehen sein.

Der Niederdruckteil 31 der Dampfturbine 26 ist abströmseitig mit einem Kondensator 32 verbunden, in dem der aus der Dampfturbine 26 abströmende entspannte Dampf kondensiert.

Der Kondensator 32 ist seinerseits ausgangsseitig über eine Kondensatleitung 33, in die eine Kondensatpumpe 34 geschaltet ist, mit einem Speisewasserbehälter 35 verbunden, in dem das kondensierte Wasser zwischengespeichert wird. Dieser ist speisewasserseitig über eine Speisewasserleitung 36, in die eine Speisewasserpumpe 37 geschaltet ist, mit dem Dampferzeuger 22 verbunden, so dass das Wasser erneut dem Dampfkessel zugeführt wird und ein geschlossener Wasser-Dampf-Kreislauf 25 entsteht.

Zur Verbesserung des Wirkungsgrades erfolgt üblicherweise eine regenerative Speisewasservorwärmung bei der das Speisewasser mit Anzapfdampf 54 aus beispielsweise dem Niederdruckteil 31 der Dampfturbine 26 vorgewärmt wird, bevor es in den Dampferzeuger 22 zurückgeführt wird.

In der erfinderischen Vorrichtung fällt diese Speisewasservorwärmung weg, so dass der üblicherweise hierfür benötigte Dampf zur Energieerzeugung genutzt werden kann. Stattdessen sind in die Kondensatleitung 33 und die Speisewasserleitung 36 sekundärseitig Wärmetauscher 11 geschaltet, die primärseitig in den Wärmespeicher 10 geschaltet sind und eine Einkopplung der Wärme des Wärmespeichers 10 in den Wasser-Dampf-Kreislauf 25 des Dampferzeugers 22 gewährleisten sollen.

Die Wärme im Wärmespeicher 10 kann auch zur Erzeugung von Dampf verwendet werden, der dann direkt in die Dampfturbine 26 eingespeist wird. Eine mögliche Einspeisestelle 48 ist die zum Hochdruckteil 27 der Turbine 26 führende Dampfleitung 28. Der erzeugte Dampf kann aber auch in die Überhitzerleitung 29 eingespeist werden 49. Schließlich besteht noch die Möglichkeit, den Dampf in die Dampfleitungen zwischen Mitteldruckteil 30 und Niederdruckteil 31 der Turbine 26 einzuspeisen 50.

Zur Brennstoffvortrocknung kommen üblicherweise dampfbeheizte Trockner zur Anwendung, die zum Teil mit Hochtemperaturdampf aus dem Wasser-Dampf-Kreislauf des Kraftwerksprozesses beheizt werden. Um den Anteil des benötigten Dampfes 51 aus dem Kraftwerksprozess zu reduzieren, kann auch hier Wärme aus dem Wärmespeicher 10 zur Vortrocknung des Brennstoffes verwendet werden 52.

FIG 6 zeigt schematisch den Dampfkreislauf 38 eines GuD-Kraftwerks mit einem Abhitzedampferzeuger 39 und dessen wesentlichen Komponenten Speisewasservorwärmer 40, Verdampfer 41 und Überhitzer 42. Die Abgase einer nicht gezeigten Gasturbine heizen im Abhitzedampferzeuger 39 in nacheinander geschalteten Schritten Wasser auf und erzeugen Dampf.

Im Speisewasservorwärmer 40 wird die Restwärme der Gasturbinenabgases dazu verwendet, das Speisewasser vorzuwärmen, bevor es in den Dampfkessel 43 gelangt, wodurch der Energiebedarf des Verdampfers 41 gesenkt wird. Über eine Sammelleitung 44 in der Decke des Dampfkessels 43 gelangt der Dampf in den Überhitzer 42, wo Temperatur und Druck weiter ansteigen. Der Dampf wird zur Hochdruckturbine 45 geleitet, dem ersten eines mehrstufigen Turbinenprozesses.

In der erfinderischen Vorrichtung kann der Speisewasservorwärmer 40 entweder durch Zufuhr von Wärme 46 aus dem Wärmespeicher 10 ergänzt oder sogar ersetzt werden. Alternativ oder zusätzlich kann mit der Wärme des Wärmespeichers 10 aber auch direkt Dampf erzeugt und dem im Abhitzedampferzeuger erzeugten Dampf beigemischt 47 werden.

## Patentansprüche

1. Vorrichtung zur Nutzung von Überkapazitäten im Stromnetz (9), umfassend einen Wärmespeicher (10) und ein Heizelement (8) zur Speicherung von Energie aus dem Stromnetz (9) im Wärmespeicher (10),
**gekennzeichnet durch** einen Wärmetauscher (11) mit einer Primärseite und einer Sekundärseite,
wobei die Primärseite zur Ausspeicherung von Wärme aus dem Wärmespeicher (10) thermisch an den Wärmespeicher (10) angekoppelt ist und wobei die Sekundärseite in eine Kraftwerksanlage (12) geschaltet ist.

2. Die Vorrichtung nach Anspruch 1, wobei die Kraftwerksanlage (12) eine Gasturbine (13) umfasst.

3. Die Vorrichtung nach Anspruch 2, wobei der Wärmetauscher (11) zur Luftvorwärmung sekundärseitig in eine Luftzufuhrleitung einer Brennkammer (15) geschaltet ist.

4. Die Vorrichtung nach Anspruch 2 oder 3, wobei der Wärmetauscher (11) zur Brennstoffvorwärmung sekundärseitig in eine Brennstoffzufuhrleitung geschaltet ist.

5. Die Vorrichtung nach einem der Ansprüche 2 bis 4, wobei der Wärmetauscher (11) zur Zwischenüberhitzung sekundärseitig in den Abgasstrom in einer Turbine (16) der Gasturbine (13) geschaltet ist.

6. Die Vorrichtung nach einem der vorhergehenden Ansprüche, wobei die Kraftwerksanlage (12) eine Dampfturbine (26) umfasst.

7. Die Vorrichtung nach Anspruch 6, wobei der Wärmetauscher (11) zur Zwischenüberhitzung sekundärseitig in den Dampfstrom in der Dampfturbine (26) geschaltet ist.

8. Die Vorrichtung nach einem der Ansprüche 6 oder 7, wobei der Wärmetauscher (11) als Vorwärmer sekundärseitig in einen Wasser/Dampf-Kreislauf (25) geschaltet ist.

9. Die Vorrichtung nach einem der Ansprüche 6 bis 8, wobei der Wärmetauscher (11) sekundärseitig in eine Vortrocknung / Kohletrocknung geschaltet ist.

10. Die Vorrichtung nach einem der vorhergehenden Ansprüche, wobei die Kraftwerksanlage eine GuD-Anlage ist und einen Abhitzedampferzeuger (39) umfasst.

11. Die Vorrichtung nach Anspruch 10, wobei der Wärmetauscher (11) einen Speisewasservorwärmer (40) im Abhitzedampferzeuger (39) ersetzt.

12. Die Vorrichtung nach einem der Ansprüche 10 oder 11, wobei der Wärmetauscher (11) zur Zwischenüberhitzung sekundärseitig in den Dampfstrom in einer Dampfturbine (45) der GuD-Anlage geschaltet ist.

13. Verfahren zur Nutzung von Überkapazitäten im Stromnetz, **dadurch gekennzeichnet, dass** im Falle eines Überangebots an Energie diese direkt über ein Heizelement in einen Wärmespeicher eingebracht wird und im Entladungsfall dieses Wärmespeichers die Wärme aus dem Wärmespeicher entnommen und über einen Wärmetauscherprozess indirekt in einen thermodynamischen Kreisprozess eingekoppelt wird, wobei elektrische Energie erzeugt wird.

14. Verfahren nach Anspruch 13, wobei der thermodynamische Kreisprozess ein bestehender Kraftwerksprozess ist.

15. Verfahren nach einem der Ansprüche 13 oder 14, wobei die Wärme aus dem Wärmespeicher zur Vorwärmung von Luft in einer Luftzufuhrleitung einer Brennkammer verwendet wird.

16. Verfahren nach einem der Ansprüche 13 bis 15, wobei mit Wärme aus dem Wärmespeicher Brennstoff vorgewärmt wird.

17. Verfahren nach einem der Ansprüche 13 bis 16, wobei ein Abgasstrom in einer Turbine einer Gasturbine zwischenüberhitzt wird.

18. Verfahren nach einem der Ansprüche 13 oder 14, wobei mit der Wärme aus dem Wärmespeicher ein Dampfstrom einer Dampfturbine zwischenüberhitzt wird.

19. Verfahren nach einem der Ansprüche 13, 14 oder 18, wobei mit der Wärme aus dem Wärmespeicher Wasser eines Wasser/Dampf-Kreislaufs vorgewärmt wird.

20. Verfahren nach einem der Ansprüche 13, 14, 18 oder 19, wobei mit der Wärme aus dem Wärmespeicher Kohle getrocknet wird.

21. Verfahren nach einem der Ansprüche 13, 14, 18, 19 oder 20, wobei die Wärme aus dem Wärmespeicher Wasser verdampft und der Dampf direkt in eine Dampfturbine eingespeist wird.
